# EUROPEAN PATENT APPLICATION

(11) **EP 4 700 375 A1**
(43) Date of publication of application: **25.02.2026**
(21) Application number: 25779488.3
(22) Date of filing: 14.03.2025
(51) Int. Cl.: G01N 21/88, G01N 21/94, G01N 21/25, H01M 4/04

(54) **ELECTRODE SURFACE ANALYSIS METHOD AND ELECTRODE SURFACE ANALYSIS SYSTEM**

(30) Priority: 27.03.2024 KR 20240041537
(71) Applicant: LG Energy Solution, Ltd., Seoul 07335 (KR)
(72) Inventor: GU, Jaejin, Daejeon 34122 (KR); KWON, Soon Hwan, Daejeon 34122 (KR)
(74) Representative: Goddar, Heinz J.
(86) International application number: PCT/KR2025/003321
(87) International publication number: WO 2025/206629

(57) **Abstract**

The present disclosure relates to a method and system for analyzing an electrode surface, and more specifically, to a method and system for analyzing an electrode surface that can precisely analyze foreign substances remaining on the electrode surface during an electrode manufacturing process using a hyperspectral CCD to increase process efficiency and product reliability.

## Description

### [Technical Field]

### Cross-citation with Related Applications

This application claims the benefit of priority to Korean Patent Application No. 10-2024-0041537, filed March 27, 2024.

### Technical Field

The present disclosure relates to a method and system for analyzing an electrode surface, which are used in a process for manufacturing a secondary battery, for precisely analyzing foreign substances on the electrode surface.

### [Related Art]

As the development and demand for mobile devices continue to grow, the demand for secondary batteries as power sources has also increased rapidly, and accordingly, extensive research has been conducted on secondary batteries to meet various requirements.

These secondary batteries are manufactured in such a way that the electrode assembly is embedded in the battery case along with the electrolyte. The electrode assembly is classified into a stacked type, a folded type, or a stacked-folded type depending on the manufacturing method. In the case of stacked or stacked-folded type electrode assemblies, the unit assembly consists of a structure in which the positive electrode and negative electrode are stacked sequentially with a separator between them. To make these electrode assemblies, it is necessary to first manufacture positive and negative electrodes with electrode tabs formed.

The electrode process for manufacturing electrodes for a secondary battery includes (1) mixing process, (2) coating process, (3) rolling process, and (4) slitting and notching process, which are performed as an in-line process.

The (1) mixing process is a process for preparing a slurry for forming the active material layer of the electrode. Slurries can be prepared by weighing and mixing the various raw materials needed to form the active layer, including electrode active materials, binders, and conductive materials.

Furthermore, the (2) coating process is a process in which the slurry is thinly coated on the current collector and dried to form an electrode active material layer. The term "electrode sheet" refers to a structure including a current collector and an electrode active material layer formed on the current collector.

Furthermore, the (3) rolling process is a process of uniformly flattening the electrode sheet by passing it between two rolls. The rolling process is also known as the roll pressing process.

In addition, the (4) slitting and notching process is the process of cutting the electrode sheet to fit the battery size. The slitting process may cut the battery sheet lengthwise to meet the battery design specifications. The notching process is a process of forming the V-groove and an electrode tab after the slitting process. In the notching process, the electrode sheet is generally placed on a die, and a portion of the electrode sheet may be punched using a press, or an electrode tab may be formed by etching. Meanwhile, a small pouch line may have an etching process between the rolling and slitting processes.

However, foreign substances from this etching process can remain on the surface of the electrode, degrading the quality of the electrode. If the types and residual amounts of foreign substances remaining on the surface of the electrode can be identified, the etching process may be designed and implemented to minimize the generation of these substances. In this context, foreign substances may refer to residues such as binders contained in the active material layer of the electrode.

Generally, vision is utilized on inline equipment for inline processes for electrode manufacturing to check for residual foreign substances. However, the vision has a large field of view (FOV), so it can only detect the presence or absence of residual foreign substances, and it is difficult to accurately identify their types and residual amounts. The electrode etching process is performed as an inline process, and due to the limitations of inline equipment, a vision had to be installed, and furthermore, there were technical constraints in installing a more precise camera capable of analyzing foreign substances, other than the vision.

Therefore, it is necessary to develop a technology for analyzing an electrode surface that can identify the types and residual amounts of foreign substances remaining on the electrode surface after the etching process.

### [Prior Art Reference]

(Patent Reference 1) Korean Laid-open Patent Publication No. 2011-0029011

### [Detailed Description of the Invention]

### [Technical Problem]

The inventors of the present disclosure conducted a multifaceted study to solve the above problem and found that by introducing a hyperspectral CCD (Charge Coupled Device) as an offline equipment in addition to vision, which is an inline equipment provided in the inline process for manufacturing electrodes, it is possible to analyze the electrode surface more precisely.

Accordingly, it is an object of the present disclosure to provide a method for analyzing an electrode surface using a hyperspectral CCD.

Another object of the present disclosure is to provide a system for analyzing an electrode surface using a hyperspectral CCD.

### [Technical Solution]

To accomplish the above objectives, the present disclosure provides a method for analyzing an electrode surface using a hyperspectral charge coupled device (CCD), comprising:
(a) photographing an electrode surface with a hyperspectral CCD to obtain a spectrum of the electrode surface;
(b) visualizing the electrode surface, using a spectrum of the electrode surface; and
(c) quantifying the visualized electrode surface.

One example of the present disclosure provides a method for analyzing an electrode surface, wherein, step (a) comprises: in a spectrum representing a correlation between wavelength and intensity of brightness of the electrode surface taken by the hyperspectral CCD,
selecting, as a threshold, the average value or median value of the intensity of brightness corresponding to a wavelength region having a large gap in intensity of brightness between two selected from the group consisting of the surface of the current collector, the surface of the electrode active material layer, and foreign substances included on the electrode surface; and
dividing based on the threshold, the electrode surface into individual regions including the surface of the current collector, the surface of the electrode active material layer, and foreign substances.

In one example of the present disclosure, in step (b), different visually distinct colors are matched for the individual regions identified in step (a), and the regions are visualized as represented by the matched colors.

In one example of the present disclosure, in step (c), the electrode surface is quantified by calculating a proportion of pixels in each individual region included in the electrode surface, relative to the total pixels of the electrode surface visualized in step (b).

One example of the present disclosure provides a method for analyzing an electrode surface, wherein the hyperspectral CCD precisely inspects foreign substances in any specific area of the electrode surface.

One example of the present disclosure provides a method for analyzing an electrode surface, wherein the field of view (FOV) of the specific area includes an area of 0.1 mm to 5 mm in width and 0.1 mm to 5 mm in length.

In one example of the present disclosure, a method for analyzing an electrode surface is provided, wherein the electrode is an electrode after the electrode etching process that forms an electrode tab during an electrode manufacturing process.

The present disclosure further provides a system for analyzing an electrode surface, comprising a hyperspectral CCD part for photographing an electrode surface using a hyperspectral CCD to obtain a spectrum of the electrode surface;
a visualization part for visualizing the electrode surface using a spectrum of the electrode surface; and
a quantification part for quantifying the visualized electrode surface.

### [Advantageous Effects]

According to the present disclosure, in the process of manufacturing electrodes for secondary batteries, the type and amount of foreign substances present on the electrode surface after the etching process for forming the electrode tab can be analyzed more precisely, thereby improving the process efficiency and product reliability of the electrodes manufactured. Also, the ability to precisely analyze foreign substances can also be used to check the performance of the equipment used in the etching process, such as the etching laser.

### [Brief Description of Drawing]

FIG. 1 shows data on the relationship between wavelength and intensity of brightness that can be obtained from images taken with a hyperspectral CCD.
FIG. 2 shows individual spectra of the current collector surface, electrode active layer surface, and foreign substances contained on the negative electrode surface taken with a hyperspectral CCD.
FIG. 3 shows an integrated spectrum of the negative electrode surface, which integrates the individual spectra of the current collector surface, electrode active layer surface, and foreign substances contained on the negative electrode surface taken with a hyperspectral CCD.
FIG. 4 is a visualization of the negative electrode surface taken with a hyperspectral CCD.
FIG. 5 shows the negative electrode surfaces visualized using a hyperspectral CCD and vision camera in Example 1 and Comparative Example 1.

### [Best Mode]

Hereinafter, the present disclosure will be described in more detail to provide a better understanding.

The terms and words used in this specification and claims are not to be construed in their ordinary or dictionary sense, but rather in a sense and concept consistent with the technical idea of the present disclosure, based on the principle that the inventor may define the concept of a term as he/her sees fit to best describe the disclosure.

As used herein, the term "analyzing an electrode surface" means to detect or measure the substances constituting the electrode surface to derive the types and amounts thereof. As used herein, the electrode subjected to surface analysis may be an electrode after the etching process in the course of the electrode manufacturing process. Etching process means a process in which the electrode active material layer is removed by etching the electrode active material layer from the electrode on which the current collector and electrode active material layer are formed during the electrode manufacturing process to form an electrode tab. Thus, after the etching process, the electrode surface may include the surface of the current collector, the surface of the electrode active material layer, and foreign substances. The foreign substance may be a binder contained in the electrode active material layer. Ultimately, the electrode surface analysis may be intended to analyze the types and amounts of foreign substances contained on the electrode surface. In this case, the electrode active material layer is formed by coating on the current collector, so it can also be called an electrode coating layer.

### Method for analyzing an electrode surface

The present disclosure relates to a method for analyzing an electrode surface.

The method for analyzing an electrode surface according to the present disclosure, using a hyperspectral charge coupled device (CCD), comprises:
(a) photographing the electrode surface with a hyperspectral CCD to obtain a spectrum of the electrode surface;
(b) visualizing the electrode surface, using a spectrum of the electrode surface; and
(c) quantifying the visualized electrode surface.

In the present disclosure, in step (a), the electrode surface may be photographed using a hyperspectral CCD to obtain a spectrum of the electrode surface.

A hyperspectral CCD is a type of camera that can measure hyperspectral images (HSI). While RGB has three channels, HSI can measure a wide range of wavelengths, up to 200 spectral bands. For this, HSI detects complex features that are not found in RGB images. While RGB images have only spatial features, HSI has both spectral and spatial features, which makes it perform well for classification. As such, HSI is capable of fine-grained classification of even similar colors, making it widely applicable in a variety of fields, including remote sensing.

In one example of the present disclosure, the hyperspectral CCD can be applied to electrode surface analysis to provide a more precise analysis of the electrode surface.

The hyperspectral CCD comprises: (i) an optical part for scanning and measuring an object to be measured; (ii) a spectral part for spectralizing light received in the optical part; and (iii) a detection part for converting the spectralized light into a spectrum.

The (i) optical part includes an optical lens. Using the optical lens, the electrode surface to be measured can be scanned and measured. Light is received from the electrode surface through the optical lens. The wavelengths of the received light may vary depending on the nature of the electrode surface, the presence of foreign substances, and the types and amounts thereof.

Further, the (ii) spectral part comprises a dispersive element for spectroscopy light.

Furthermore, the (iii) detection part is also referred to as a sensor part and can convert the spectralized light into a spectrum.

In one example of the present disclosure, the hyperspectral CCD can precisely inspect or measure any specific area included on the electrode surface.

The field of view (FOV) of the specific area can inspect or measure a narrow area of 0.1 mm to 5 mm in width and 0.1 mm to 5 mm in length.

The FOV of conventional vision cameras can only inspect or measure a large area of 400 mm in width and 400 mm in length, resulting in poor precision. As such, conventional vision cameras have a large FOV and can only check the presence or absence of foreign substances on the electrode surface, making it difficult to precisely analyze the types and amounts of foreign substances.

In one example of the present disclosure, a threshold for distinguishing between the components present on the electrode surface can be obtained by using the spectrum of the electrode surface obtained from the hyperspectral CCD. The components present on the electrode surface may include the surface of the current collector, the surface of the electrode active material layer, and foreign substances.

For example, the spectrum of the electrode surface obtained from the hyperspectral CCD may include individual spectra for the surface of the current collector, the surface of the electrode active material layer, and foreign substances contained on the electrode surface. The individual spectra are superimposed to obtain an integrated spectrum. The threshold at which the surface of the current collector, the surface of the electrode active material layer, and foreign substances are distinguished is established in the integrated spectrum. The spectrum may represent a correlation between wavelength and intensity of brightness.

The threshold may be established by logic including (i) and (ii) below:
(i) selecting, from a spectrum of the electrode surface obtained from a hyperspectral CCD, a wavelength region having the largest gap in intensity of brightness between two selected from the group consisting of the surface of the current collector, the surface of the electrode active material layer, and foreign substances contained on the electrode surface; and
(ii) selecting as a threshold the average or median of the intensity of brightness corresponding to the wavelength region with the largest gap in intensity of brightness between the individual regions.

Specifically, the gap may comprise (a) a gap of intensity of brightness between the surface of the current collector and the surface of the electrode active material layer; (b) a gap of intensity of brightness between the surface of the electrode active material layer and foreign substances; and (c) a gap of intensity of brightness between the surface of the current collector and foreign substances.

In one example of the present disclosure, individual regions of the electrode surface can be distinguished based on the threshold. For example, the individual regions on the electrode surface may include the surface of the current collector, the surface of the electrode active material layer, and foreign substances.

In the present disclosure, in step (b), the electrode surface can be visualized using a spectrum of the electrode surface.

In step (a), different visually distinct colors may be matched for the divided individual regions. In this case, the matching colors are not particularly limited to specific colors, as long as the individual regions can be visually distinguished from one another using different colors.

In this case, the visualization means representing individual regions of the electrode surface, each with a different color match. The visualization may be implemented with a visualization software program, and is not particularly limited, as long as the software program is driven by logic capable of representing each individual region distinguished by the discrimination criteria on the electrode surface with matched colors.

In the present disclosure, in step (c), the visualized electrode surface can be quantified.

Specifically, the electrode surface can be quantified by calculating the proportion of pixels corresponding to each of the individual regions based on the total pixels of the visualized electrode surface. In particular, by calculating the proportion of pixels contained in the individual region corresponding to the identified foreign substances, the amount of each foreign substances remaining on the electrode surface can be obtained.

The quantification may be performed by a quantification software program, and is not particularly limited, as long as the software program is driven by logic that calculates the proportion of pixels corresponding to each component based on the total pixels on the electrode surface.

### System for analyzing an electrode surface

The present disclosure also relates to a system for analyzing an electrode surface.

The system for analyzing an electrode surface according to the present disclosure, comprises: a hyperspectral CCD part for photographing an electrode surface; a visualization part for visualizing the electrode surface using a spectrum of the electrode surface imaged by the hyperspectral CCD; and a quantification part for quantifying the visualized electrode surface.

The hyperspectral CCD part may comprise a hyperspectral CCD.

Furthermore, the visualization part may comprise a visualization software program, and is not particularly limited, as long as the software program is driven by logic capable of representing each region of components distinguished by the discrimination criteria on the electrode surface with matched colors.

Further, the quantification part may comprise a quantification software program, and is not particularly limited, as long as the software program is driven by logic that calculates the proportion of pixels corresponding to each component based on the total pixels on the electrode surface.

### [Mode for Practicing the Invention]

Hereinafter, preferred examples of the present disclosure are described for the purpose of illustrating the present disclosure, but it will be apparent to those skilled in the art that various changes and modifications are possible within the scope of the present disclosure and the technical idea, and that such changes and modifications fall within the scope of the appended patent claims.

### Example 1

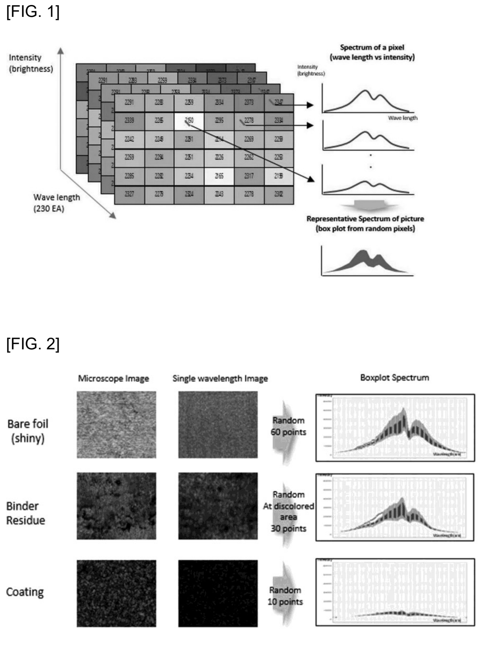

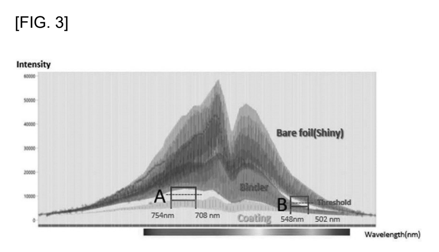

Since the correlation between wavelength and intensity of brightness was obtained from the image taken by the hyperspectral CCD (FIG. 1), the spectrum of the negative electrode surface was obtained and analyzed as shown below. The correlation between wavelength and intensity of brightness is also referred to as the spectrum of a pixel.

### (1) Obtaining of a spectrum for the negative electrode surface

Using a hyperspectral CCD (Hyper Spectral Camera, Manufactured by Mitutoyo), the electrode surface after the etching process to form an electrode tab during the electrode manufacturing process was photographed. The electrode is a negative electrode, comprising a Cu current collector and a negative electrode active material layer formed on one surface of the Cu current collector. The surface of the negative electrode includes the surface of the Cu current collector (bare foil), the binder separated from the negative electrode active material layer (binder residue), and the negative electrode active material layer (coating).

From the negative electrode surface images taken with the hyperspectral CCD, individual spectra were obtained for bare foil, binder residue, and coating (FIG. 2). The individual spectra were obtained from raw data obtained from hyperspectral CCD images and realized as boxplot spectra. Microscope images are taken with an optical microscope, and single wavelength images are taken with a single wavelength spectrophotometer.

### (2) Establishment of classification criteria for foreign substances on the negative electrode surface

After obtaining the integrated spectrum that integrates the individual spectra of bare foil, binder residue, and coating, the threshold at which each individual spectrum is distinguished from the integrated spectrum was selected as follows (FIG. 3).

From the integrated spectra shown in FIG. 3, the wavelength region with the largest gap in intensity of brightness between each individual spectrum was selected. First, the region A was selected as the wavelength region with the largest gap in intensity of brightness between the coating and binder, and the region B was selected as the wavelength region with the largest gap in intensity of brightness between the binder and bare foil. The wavelength range of the region A is 708 to 754 nm, and the wavelength range of the region B is 502 to 548 nm.

The average value of the intensity of brightness corresponding to the wavelength region corresponding to the region A is called the threshold A, and the average value of the intensity of brightness corresponding to the wavelength region corresponding to the region B is called the threshold B.

Using the thresholds A and B, the negative electrode surface was classified.

Table 1 below is a categorization of the negative electrode surface classified using the thresholds A and B. The negative electrode surface was divided into four cases, which can be derived using thresholds A and B, and the individual regions corresponding to these cases were classified.

**[Table 1]**

| Case | Threshold A | Threshold B | Identification of the negative electrode surface | Color | Remarks |
|---|---|---|---|---|---|
| Case 1 | > Threshold A | > Threshold B | Bare foil | 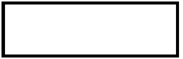 | |
| Case 2 | < Threshold A | > Threshold B | Coating | 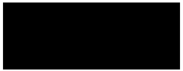 | Presumed to be Coating (The reliability of threshold B is lower than that of threshold A) |
| Case 3 | > Threshold A | < Threshold B | Binder | 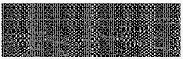 | |
| Case 4 | < Threshold A | < Threshold B | Coating | 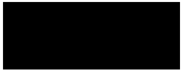 | |

As shown in Table 1 above, based on the thresholds A and B, each individual region contained in the negative electrode surface and its matching color can be defined. The colors are not particularly limited, as long as they are colors that can visually distinguish the negative electrode surface separated by thresholds A and B.

### (3) Visualization of the negative electrode surface

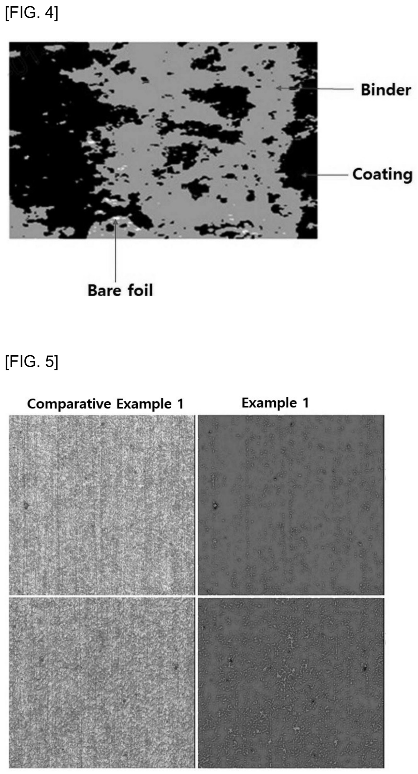

The negative electrode surface was visualized using a negative electrode surface containing the individual regions identified by the thresholds A and B and their matching colors (FIG. 4). In this case, the visualization was performed using a software program driven by logic that makes the visualization object, i.e., the individual regions, to be represented by specific colors.

### (4) Quantification of the negative electrode surface

By the quantification method, the number of pixels corresponding to bare foil, binder residue, and coating were each measured on the visualized negative electrode surface, and the proportion of the total number of pixels on the negative electrode surface was calculated. In this case, the quantification was performed by a software program driven by logic capable of calculating the proportion of the pixels corresponding to a specific region, i.e., an individual region, included in the quantification object based on the total pixels of the quantification object, i.e., the negative electrode surface.

Table 2 below shows a quantification of the negative electrode surface including the individual regions, i.e., bare foil, binder, and coating.

**[Table 2]**

| | Pixel quantity (Number) | Ratio (%) |
|---|---|---|
| Bare foil | 18,585 | 5.9 |
| Binder | 164,674 | 52.4 |
| Coating | 131,109 | 41.7 |
| Total | 314,368 | 100.0 |

As shown in Table 2 above, the residual amount of binder, which is the foreign substance on the negative electrode surface, can be seen.

### Comparative Example 1

Using a vision camera instead of a hyperspectral CCD, the negative electrode surface was analyzed.

As a result, it was only possible to confirm the presence of foreign substances on the negative electrode surface, as shown in FIG. 5, and no further analysis could be performed.

Although the present disclosure has been described above by way of limited examples and drawings, the invention is not limited thereby, and various modifications and variations may be made by those having ordinary skill in the art, within the technical idea of the invention and the equivalent scope of the patent claims set forth below.

## Claims

1. A method for analyzing an electrode surface, using a hyperspectral charge coupled device (CCD), comprising:
(a) photographing an electrode surface with a hyperspectral CCD to obtain a spectrum of the electrode surface;
(b) visualizing the electrode surface, using a spectrum of the electrode surface; and
(c) quantifying the visualized electrode surface.

2. The method for analyzing an electrode surface according to claim 1,
wherein step (a) comprises: in a spectrum representing a correlation between wavelength and intensity of brightness of the electrode surface taken by the hyperspectral CCD,
selecting, as a threshold, an average value or median value of the intensity of brightness corresponding to a wavelength region having a large gap between two selected from the group consisting of the surface of a current collector, the surface of an electrode active material layer, and foreign substances included on the electrode surface; and
dividing, based on the threshold, the electrode surface into individual regions comprising the surface of the current collector, the surface of the electrode active material layer, and foreign substances.

3. The method for analyzing an electrode surface according to claim 1,
wherein, in step (b), different visually distinct colors are matched for individual regions identified in step (a), and the regions are visualized as represented by the matched colors.

4. The method for analyzing an electrode surface according to claim 1,
wherein, in step (c), the electrode surface is quantified by calculating a proportion of pixels in each individual region included in the electrode surface, relative to a total pixels of the electrode surface visualized in step (b).

5. The method for analyzing an electrode surface according to claim 1,
wherein the hyperspectral CCD inspects foreign substances in any specific area of the electrode surface.

6. The method for analyzing an electrode surface according to claim 5,
wherein a field of view (FOV) of the specific area comprises an area of 0.1 mm to 5 mm in width and 0.1 mm to 5 mm in length.

7. The method for analyzing an electrode surface according to claim 1,
wherein the electrode is an electrode after the electrode etching process that forms an electrode tab during an electrode manufacturing process.

8. A system for analyzing an electrode surface, comprising a hyperspectral CCD part for photographing an electrode surface using a hyperspectral CCD to obtain a spectrum of the electrode surface;
a visualization part for visualizing the electrode surface using a spectrum of the electrode surface; and
a quantification part for quantifying the visualized electrode surface.
